# EUROPEAN PATENT APPLICATION

(11) **EP 0 611 524 A1**
(43) Date of publication of application: **24.08.1994**
(21) Application number: 94102488.7
(22) Date of filing: 18.02.1994
(51) Int. Cl.: A21B 1/26, F24C 15/32

(54) **Forced convection cooking oven**

(30) Priority: 19.02.1993 IT PN930011
(71) Applicant: I.R.C.A. S.P.A. INDUSTRIA RESISTENZE CORAZZATE ED AFFINI, I-31020 San Vendemiano (TV) (IT)
(72) Inventor: Baldan, Roberto, I-31015 Conegliano, Treviso (IT)
(74) Representative: Grünecker, Kinkeldey, Stockmair & Schwanhäusser Anwaltssozietät

(57) **Abstract**

The oven comprises a housing (19) in which two radial-flow blowers (15) disposed at symmetrical positions with vertical axes of rotation (18) generate a flow of air heated by respective heater means (13), in a closed circuit including respective delivery chambers (10), a cooking chamber (6), and an intake chamber (8). The blowers (15) rotate in opposite directions relative to one another to thereby create a uniform air flow.

## Description

The present invention relates to a forced-convection cooking oven particularly, but not exclusively, for commercial use.

As known for instance from EP-B-0 344 743, modern forced-convection ovens basically comprise a housing, with a cooking chamber defined therein for the accommodation of a plurality of shelves or the like adapted to support the foods to be cooked thereon. In particular, the shelves are adapted to be disposed above one another at different levels defined by respective support rails provided in the cooking chamber. Also provided within the housing are heater means for heating a flow of air generated by at least one blower for circulating in a substantially closed circuit comprising a delivery chamber, the cooking chamber, and an inlet chamber. The delivery chamber, which normally houses the heater means, is separated from the cooking chamber by a perforated partition. The blower is usually a centrifugal ventilator from which air is delivered in a turbulent flow to the delivery chamber, which is generally of parallelepipedic configuration. As a result, the forced air flow assumes a non-uniform distribution, tending to concentrate in the corners of the delivery chamber, from where it is directed into the cooking chamber through lateral distributor passages. For minimizing the non-uniformity of the air distribution it has been proposed to provide suitably arranged openings in the partition and/or in the walls of the lateral distributor passages. The shapes and locations of these openings were carefully and individually determined on an empirical basis. In any case, it is well known that these provisions are only partially successful in improving the distribution of the air in the delivery chamber. It is however particularly important to obtain maximum uniformity of the distribution of the air circulation in the cooking chamber to thereby ensure a correspondingly uniform cooking of the foods supported on the shelves at different levels. This requirement gets obviously more important as the number of shelves disposed above one another in the cooking chamber increases.

It is therefore an object of the invention to provide a forced-convection cooking oven of simple construction and capable of maintaining a substantially uniform air circulation in its interior.

According to the invention, this object is attained in a forced-convection cooking oven incorporating the characteristics of the appended claims.

The characteristics and advantages of the invention will become more clearly evident from the following description, given by way of example with reference to the accompanying drawings, wherein:
- fig. 1: shows a diagrammatic top plan view, in section, of a cooking oven according to a preferred embodiment,
- fig. 2: shows a diagrammatic section view taken along the line II-II in fig. 1, and
- fig. 3: shows a diagrammatic top plan view corresponding to fig. 1 of another embodiment of a cooking oven.

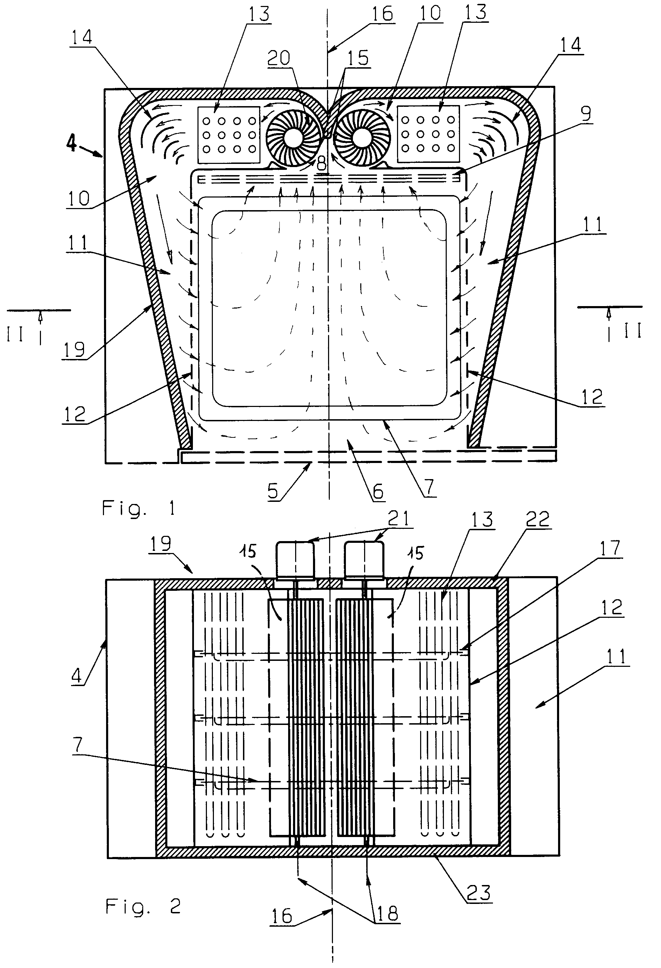

With reference to figs. 1 and 2, a forced-circulation cooking oven comprises a housing generally indicated at 4 and provided with a door 5 giving access to a cooking chamber 6 defined by an inner casing 19 preferably having horizontal top and bottom walls 22 and 23, respectively. The cooking chamber 6 contains a number of horizontally disposed, removable shelves 7 or the like adapted to support thereon the foods to be cooked. As diagrammatically shown in fig. 2, the shelves 7 are substantially disposed above one another at different levels defined by lateral support rails 17. At the rear, cooking chamber 6 communicates with an intake chamber 8 through perforations formed in a partition 9. Intake chamber 8 on its part communicates with a pair of delivery chambers 10 via associated blower means to be described.

As illustrated in figs. 1 and 2, delivery chambers 10 are of substantially parallelepipedic configuration and communicate with respective air delivery ducts 11 extending symmetric-ally along both lateral sides of cooking chamber 6 from the rear to the front of the oven, and communicating with cooking chamber 6 through associated air delivery passages 12. Each delivery chamber 10 houses heater means 13 disposed at symmetric locations and comprising for instance a plurality of electric heater elements or heat exchangers of any other type capable of suitably heating the air circulating within the oven.

The laterally outer corners of delivery chambers 10 are preferably rounded as shown in fig. 1 so as to minimize losses. For the same reason air delivery ducts 11 are preferably of convergent shape from the rear to the front of the oven. A further reduction of losses and improved distribution of the air flow can additionally be achieved by the provision of one or several baffles 14 at the junction of delivery chambers 10 and ducts 11. Taken as a whole, the inner casing 19 and the components associated thereto are of substantially symmetric construction with respect to an imaginary vertical plane 16 passing through the center of the casing.

According to one aspect of the invention, the blower means comprise two blowers 15 of the tangential-flow type disposed with their respective axes of rotation 18 substantially vertical at symmetric locations on both sides of vertical plane 16. The blowers 15 are powered for example by respective electric motors 21 to rotate in opposite directions so as to aspirate air from the center of intake chamber 8 and to laterally expel it along delivery chambers 10 and air ducts 11 into cooking chamber 6.

The tangential-flo blowers 15 may be of the per se known type and preferably comprise blades 20 extending in the axial direction substantially over the full interior height of intake chamber 8 and delivery chambers 10. The necessary height of blowers 15 may of course be obtained by axially joining a plurality of blower rotors having blades 20 of reduced dimensions.

As a result of the described construction, and as has been experimentally confirmed, the forced-convection oven according to the invention is capable of creating a forced air flow directed parallel to the shelves 7 in a substantially uniform pattern. In particular, the forced air flow tends to circulate along flow lines extending in horizontal planes, substantially without any vertical components, at ally levels of the cooking chamber and over the full height thereof. This forced circulation of the air (heated by heater means 13) is indicated by respective arrows in fig.1.

The described flow pattern results in that all of the foods carried by the shelves 7 are cooked in an advantageously uniform manner.

It is to be noted that these advantages can be obtained according to the invention in convection ovens whose interior vertical dimensions may vary within a wide range as required. This permits to obtain a substantially invariable performance of the oven, irrespective of its capacity and of the number of shelves 7 provided therein. The top and bottom walls 22 and 23, respectively, of casing 19 may under this aspect be of modular construction, enabling them to be used in ovens of different heights, i.e. of different capacities.

In addition it is noted that the convection oven according to the invention may have an advantageously reduced depth as compared to conventional constructions. This is because the motors 21 for driving the blowers 15 can be disposed, without the need for any transmission means, above the top wall 22 of inner casing 19, i.e. at a location whereat accommodation space is usually not a problem.

It is understood that the described cooking oven may undergo numerous modifications within the purview of the invention, as indicated by way of example in the following:
- The heater means 13 may be disposed at any other location within the path of the forced air flow, for instance laterally of cooking chamber 6 or in intake chamber 8.
- Steam generator means of a per se known type may be provided in the space between the two blowers 15 or at the sides of the delivery chambers 10.
- The air flow rate in the oven may be made variable by the use of adjustable baffles, by varying the rotary speed of the motors 21 driving the blowers 15, and/or by the use of adjustable shutters at the intake side of the blowers 15.
- The employ of transmission means would permit both blowers 15 to be driven by a single motor.

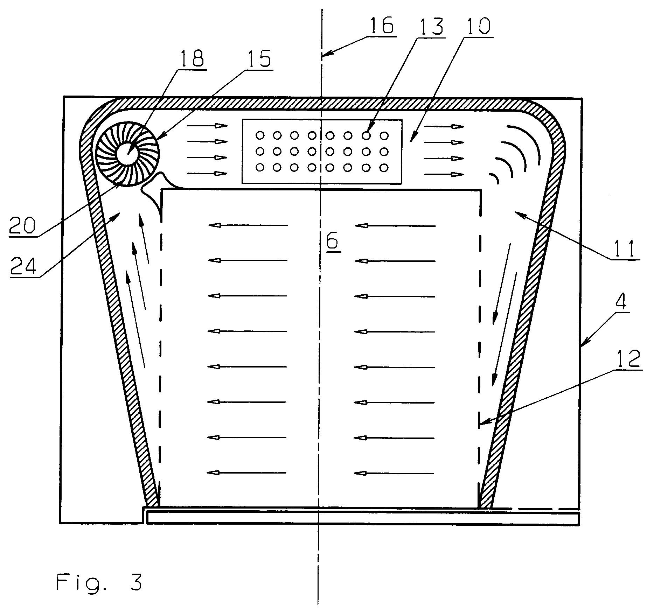

Diagrammatically shown in fig. 3, in which identical components are designated by the same reference numerals, is a modified embodiment of the convection oven according to the invention which is of simplified construction, with the resultant economical advantages.

In the embodiment shown in fig. 3, the inner casing 19 with the components contained therein is likewise of substantially symmetrical configuration, with the most significant difference that the oven is equipped with only a single tangential-flow blower 15, preferably disposed, with its axis of rotation 18 extending vertical, at a lateral location adjacent a (preferably rounded) rear corner of casing 19.

In this embodiment the duct (designated 24) immediately upstream of blower 15 acts as an intake chamber, with only a single delivery chamber 10 connecting blower 15 to a single delivery duct 11 on the opposite side. In particular, delivery chamber 10 extends parallel to the rear wall of inner casing 19 and contains heater means 13 which may comprise a single group of heater elements.

The structural simplicity of the oven of fig. 3 is clearly evident, with the oven nevertheless substantially offering the same advantages as the embodiment described with reference to figs. 1 and 2. The functional principle is likewise substantially identical, with the difference that the forced air flow (represented by arrows in fig. 3) traverses the cooking chamber 6 along transversely extending paths instead of in the manner depicted in fig. 1. In any of these cases, the result is a substantially uniform distribution of the forced air flow, and thus the correspondingly uniform cooking of the foods in the oven.

## Claims

1. A forced-convection oven comprising a casing in which blower means are adapted to circulate, in a substantially closed circuit including at least a delivery chamber, a cooking chamber, and an intake chamber, a flow of air in thermal exchange relationship with heater means, there being provided within said cooking chamber a plurality of substantially horizontal shelves for the support thereon of foods to be cooked, **characterized** in that said blower means comprise at least one tangential-flow blower (15) disposed with its axis of rotation (18) extending substantially vertical.

2. A cooking oven according to claim 1, characterized in that said tangential-flow blower (15) comprises blades (20) extending in the axial direction substantially over the full internal height of said casing (19).

3. A cooking oven according to claim 1, wherein said casing including said delivery, cooking and intake chambers is of substantially symmetric construction with respect to a vertical imaginary plane passing through the center of said casing, characterized in that said tangential-flow blower (15) is disposed in said casing (19) between said intake chamber (24) and said delivery chamber (10), at a lateral position adjacent a rear corner of said casing.

4. A cooking oven according to claim 1, wherein said casing including said delivery, cooking and intake chambers is of substantially symmetric construction with respect to a vertical imaginary plane passing through the center of said casing, characterized in that said blower means comprises two tangential flow blowers (15) disposed in said casing (19) with their axes of rotation (18) extending substantially vertical at symmetric positions on opposite sides of said plane (16), said blowers (15) being adapted to rotate in opposite directions relative to one another.

5. A cooking oven according to claim 4, characterized in that each tangential-flow blower (15) is disposed in said casing (19) between said intake chamber (8) and a respective delivery chamber (10), said delivery chambers extending at symmetrical positions with respect to said vertical plane.

6. A coking oven according to claim 5, characterized in that said heater means comprises at least one heater assembly (13) disposed in each of said delivery chambers (10) at symmetrical positions.

7. A cooking oven according to claim 1, characterized in that said tangential-flow blower (15) is adapted to be rotated by a motor (21) disposed outside of a top wall (22) of said casing (19).
